# EUROPÄISCHE PATENTANMELDUNG

(11) **EP 4 759 129 A1**
(43) Veröffentlichungstag der Anmeldung: **17.06.2026**
(21) Anmeldenummer: 25209845.4
(22) Anmeldetag: 20.10.2025
(51) Int. Cl.: A01G 9/24, A01G 31/06

(54) **PFLANZENAUFZUCHT-MODUL UND PFLANZENAUFZUCHT-SYSTEM**

(30) Priorität: 10.12.2024 DE 102024136833
(71) Anmelder: SSI Schäfer Automation GmbH (AT), 8051 Graz (AT)
(72) Erfinder: Fankhauser, Robert, 8143 Dobl (AT); Hoxha, Arber, 8075 Hart bei Graz (AT); Grygar, Alan, 75301 Hranice (CZ)
(74) Vertreter: Witte, Weller & Partner Patentanwälte mbB

(57) **Zusammenfassung**

Es werden ein Pflanzenaufzucht-Modul (10) sowie ein Pflanzenaufzucht-System (100) offenbart. Das Modul (10) weist eine Regalanordnung (12) und einen längsbeweglichen Giesswagen (14) auf. Die Regalanordnung (12), die aus zumindest einem, in einer Längsrichtung (X) angeordneten, Regal (16) gebildet wird, wobei jedes der Regale (16) mehrere in einer Höhenrichtung (Y) beabstandet angeordnete Regalebenen (19) aufweist, wobei austauschbare Aufzuchtplatten (18) manuell in den Regalebenen (19) platziert und aus den Regalebenen (19) entfernt werden, wobei jede der Regalebenen (19) dazu ausgebildet ist, zumindest eine der Aufzuchtplatten (18) in der Längsrichtung (X) und/oder in einer zur Längsrichtung senkrechten Tiefenrichtung (Z) aufzunehmen. Der längsbewegliche Giesswagen (14) ist zum Bewässern der Aufzuchtplatten (18) ausgebildet, wobei der Giesswagen (14) an das zumindest eine Regal (16) gekoppelt ist und eine daran befestigte Bewässerungsvorrichtung (30) umfasst, die ausgebildet ist, von einer zugänglichen Längsseite (52) des zumindest einen Regals (16) aus die Aufzuchtplatten (18) in jeder der Regalebenen (19) zu bewässern. (Fig. 1)

## Beschreibung

Die vorliegende Offenbarung betrifft ein Pflanzenaufzucht-Modul mit einer Regalanordnung und einem längsbeweglichen Gießwagen. Außerdem betrifft die Offenbarung ein Pflanzenaufzucht-System, das in ein Gewächshaus integrierbar ist und ein Pflanzenaufzucht-Modul sowie eine Klimatisierung umfasst. Das Modul ist insbesondere für den Einsatz in kleineren und mittleren Gärtnereien gedacht, die Jungpflanzen (z.B. Stecklinge) züchten.

In der konventionellen Gärtnerei werden Pflanzen bzw. Stecklinge häufig in speziellen Aufzuchtbehältern kultiviert, die entweder auf Tischen oder direkt auf dem Boden innerhalb von Gewächshäusern gelagert werden. Zur Schaffung eines kontrollierten Mikroklimas hinsichtlich Temperatur und Luftfeuchtigkeit sind diese Behälter üblicherweise mit einer Folie tunnelartig umhüllt, der einen abgetrennten Raum innerhalb des Gewächshauses bildet. Die dabei beanspruchte Fläche wird hierbei nur in geringem Maße ausgenutzt, da die Anordnung der Behälter eine effiziente Flächennutzung nicht ermöglicht. Zudem erfordert die manuelle Bewässerung das Öffnen und Verschließen der Tunnelfolie, wodurch das Mikroklima gestört wird. Diese Unterbrechung führt zu schwankenden Temperatur- und Luftfeuchtigkeitsbedingungen, welche das Pflanzenwachstum beeinträchtigen oder, z.B. bei erhöhter Luftfeuchtigkeit, die Schimmelbildung begünstigen. Infolge des manuellen Betriebs steigt die Ausschussquote bei der Aufzucht von Stecklingen erheblich.

Im Betrieb großer Gewächshäuser stellen Gießautomaten, wie sie bspw. von dem Unternehmen Knecht angeboten werden, ein bekanntes und bewährtes Mittel zur Bewässerung von Pflanzen (und Stecklingen) dar. Diese Gießautomaten sind darauf ausgelegt, Pflanzen, die auf Tischen oder direkt auf dem Boden angeordnet sind, über integrierte Düsen (von oben) mit Wasser zu versorgen. Hierzu bewegen sich die Gießautomaten entlang vorgegebener Bahnen (oberhalb) der Pflanzen, um die Bewässerung (über eine/die Ebene hinweg) durchzuführen.

Eine weitere Möglichkeit zur Bewässerung von Pflanzen stellen sogenannte Ebbe-und-Flut-Systeme dar. Dabei erfolgt die Bewässerung der Pflanzen durch eine zeitlich gesteuerte Bewässerung (Flut) des Wachstumsmediums oder der Wurzeln, gefolgt von einer gezielten Trockenlegung (Ebbe). Diese zyklische Abfolge ermöglicht eine kontrollierte Nährstoff- und Sauerstoffversorgung der Pflanzen.

Neben der vorwiegend manuellen Pflanzenaufzucht existieren auch (hoch-)automatisierte Systeme zur Pflanzenaufzucht. Die EP 3 292 750 A1 betrifft ein System zur automatisierten Aufzucht von Stecklingen, bei dem die Stecklinge in horizontalen Ebenen eines bewegten Regals gelagert werden. Dieses bewegte Regal wird durch einen karussellartigen Antrieb kontinuierlich oder in definierten Intervallen entlang einer stationären Bewässerungsanlage geführt. Die Bewässerung erfolgt über (stationäre) Bewässerungsrohre, die sprossenwandartig halbseitig offen angeordnet sind und die Stecklinge in den jeweiligen Ebenen während der Regalbewegung mit Wasser versorgen.

Ein weiteres automatisiertes Pflanzenaufzucht-System ist in der EP 3 777 519 B1 gezeigt, bei dem Regale mittels fahrerloser Transportsysteme zu einer stationären Bewässerungsanlage bewegt, dort abgesetzt und anschließend wieder wegbewegt werden.

Beide Systeme zeichnen sich durch einen hohen Automatisierungsgrad aus, was einerseits eine effiziente Bewässerung und Beleuchtung der Stecklinge sowie eine im Vergleich zu der konventionellen Gärtnerei verbesserte Flächennutzung ermöglicht. Andererseits sind solche (hoch-)automatisierten Systeme mit erheblichen Investitionsausgaben verbunden. Ein Steuerungsaufwand ist groß und komplex. Zudem führt die Vielzahl an beweglichen Komponenten zu erhöhtem Verschleiß, was insbesondere die Wartungs- und Reparaturkosten steigert. Darüber hinaus erfordern diese Systeme einen zusätzlichen Platzbedarf für die Integration der Automatisierungstechnik. Derartig hohe Investitionsausgaben und eine häufig geringe Wirtschaftlichkeit solcher Systeme machen sie insbesondere für die konventionelle Gärtnerei ungeeignet, weshalb sie dort nicht eingesetzt werden.

Weitere Systeme sind aus der US 10 785 928 B2, der EP 0 792 693 A1, der DE 10 2021 133 356 A1, der US 11 116 148 B1, US 9 986 697 B1 und der DE 10 2020 213 923 A1 bekannt. Die DE 202 16 840 U1 betrifft ein mechanisches Reinigungsgerät zur Säuberung von Dachrinnen.

Vor diesem Hintergrund ist es eine Aufgabe der vorliegenden Erfindung, ein Pflanzenaufzucht-Modul für Stecklinge bereitzustellen, dass die oben genannten Nachteile überwindet. Insbesondere soll es in kleineren und mittleren Gärtnereien ermöglicht werden, die Aufzucht von Stecklingen kostengünstiger zu gestalten, wobei gleichzeitig eine hohe Flächen- und Bewässerungseffizienz erzielt wird.

Diese Aufgabe wird gelöst durch ein Pflanzenaufzucht-Modul, das eine Regalanordnung und einen längsbeweglichen Gießwagen aufweist. Die Regalanordnung ist aus zumindest einem, in einer Längsrichtung (X) angeordneten, Regal gebildet. Jedes der Regale weist mehrere in einer Höhenrichtung (Y) beabstandet angeordnete Regalebenen auf, wobei austauschbare Aufzuchtplatten (ausschließlich) manuell in den Regalebenen platziert und aus den Regalebenen entfernt werden. Jede der Regalebenen ist dazu ausgebildet, zumindest eine der Aufzuchtplatten in der Längsrichtung (X) und/oder in einer zur Längsrichtung senkrechten Tiefenrichtung (Z) (bzw. mehrere nebeneinander) aufzunehmen. Der längsbewegliche Gießwagen ist zum Bewässern der Aufzuchtplatten ausgebildet. Ferner ist der Gießwagen an das zumindest eine Regal gekoppelt und umfasst eine daran befestigte Bewässerungsvorrichtung. Die Bewässerungsvorrichtung ist dazu ausgebildet, von einer zugänglichen Längsseite des zumindest einen Regals aus die Aufzuchtplatten in jeder der Regalebenen zu bewässern. Das Modul zeichnet sich durch niedrige Investitionskosten aus, da der Automatisierungsgrad so gering wie möglich gehalten wird, wobei die Aufzucht dennoch in einem industriellen und effizienten Rahmen erfolgt. Das Modul ist ideal für Gärtnereien, die das Modul in bestehende Gewächshäuser integrieren können. Das Bestücken der Regale mit den Platten und das Entnehmen der fertigen Platten kann manuell erfolgen, so dass auf teure, technisch komplexe Regalbediengeräte verzichtet werden kann, was auch die Steuerung vereinfacht. Der Steuerungsaufwand ist eliminiert bzw. minimiert. Allenfalls muss der Gießwagen gesteuert werden. Die Bewässerung kann automatisiert erfolgen. Die Nutzung ist flexibel, weil der Grad der Automatisierung beeinflussbar ist.

Die Bewässerung erfolgt effektiv und schnell, da mehrere (vorzugsweise alle) Regalebenen gleichzeitig bewässert werden. Die Flächennutzung ist durch das Vorsehen mehrerer Ebenen übereinander - im Vergleich zu einer normalen Feldaufzucht - optimiert. Der Gärtner kann das Modul während eines vollständigen Wachstumszyklus sich selbst überlassen, eine Automatisierung der Bewässerung bzw. des Gießwagens vorausgesetzt.

Der Verschleiß ist reduziert, da nur wenige (bis gar keine angetriebenen) Komponenten zum Bewässern benötigt werden.

Die Regalanordnung ist modular, so dass Regale hinzugefügt oder entfernt, die Anzahl der Ebenen angepasst sowie die Regal-Tiefe in einfacher oder doppeltiefer Ausführung flexibel gewählt werden kann. Die Pflanzenaufzucht-Kapazität kann nach Bedarf angepasst werden.

Der längsbewegliche Gießwagen sorgt für eine gleichmäßigere und präzisere Bewässerung jeder Regalebene im Vergleich zur manuellen Bewässerung, wodurch sowohl der Wasserverbrauch als auch der manuelle Aufwand reduziert werden.

Die Kopplung von Regal und Gießwagen zu einer Einheit sorgt für eine optimale Abstimmung und Kompatibilität der beiden Komponenten.

Vorzugsweise weist die Bewässerungsvorrichtung auf: eine Vielzahl von Bewässerungsarmen, die in die Tiefenrichtung Z der jeweiligen Regalebene hineinreichen und die dazu ausgebildet sind, die Aufzuchtplatten vollflächig von oben zu beregnen und/oder eine Vielzahl von Bewässerungssprühdüsen, die vorzugsweise außerhalb des Regals angeordnet sind, wobei die Bewässerungssprühdüsen dazu ausgebildet sind, die Aufzuchtplatten vollflächig entlang der Tiefenrichtung Z von der zugänglichen Längsseite aus zu besprühen.

Die Bewässerung über Bewässerungsarme und/oder -sprühdüsen sorgt für eine gleichmäßige und vollflächige Bewässerung der Pflanzen, entweder von oben oder seitlich entlang der Tiefenrichtung, wodurch eine optimale Wasserverteilung und eine gleichmäßige Versorgung der Pflanzen sichergestellt werden.

Die wahlweise Beregnung oder Besprühung ermöglicht eine flexible Anpassung des Bewässerungsvorgangs an die spezifischen Bedürfnisse unterschiedlicher Pflanzenarten, wodurch eine gezielte Versorgung gewährleistet wird.

Vorzugsweise ist die Vielzahl an Bewässerungsarmen bzw. Bewässerungssprühdüsen gleich einer Anzahl an Regalebenen.

Die gleichmäßige Bewässerung aller Aufzuchtplatten bei einer Längsbewegung des Gießwagens ermöglicht eine effiziente und zeitsparende Bewässerung, da nur eine einzige Bewegung (Fahrt) des Gießwagens erforderlich sein kann, um alle Regalebenen zu bewässern.

Vorzugsweise sind zumindest einige der Bewässerungsarme oder der Bewässerungssprühdüsen höhenverstellbar ausgebildet.

Die Höhenverstellbarkeit ermöglicht eine präzise Anpassung an die jeweilige Höhe der Pflanzen in jeder Ebene.

Die Höhenverstellbarkeit der Bewässerungseinheit ermöglicht eine flexible Anpassung, wenn bspw. Regalebenen entfernt werden. Zudem bietet die Höhenverstellbarkeit eine kostengünstigere Ausführung der Bewässerungsvorrichtung, da die Anzahl der Bewässerungsarme bzw. -sprühdüsen reduziert werden kann. Bei vier Ebenen könnten zwei der Ebenen während einer Hinfahrt und die restlichen zwei Ebenen während einer Fahrt des Gießwagens zurück bewässert werden.

Vorzugsweise ist an jedem der Bewässerungsarme bzw. Bewässerungssprühdüsen ferner zumindest eine mitfahrende Einheit angebracht ist, die ausgewählt aus: einem Lüfter, um überschüssige Bewässerungsflüssigkeit von den Pflanzen zu blasen; einem Kamm, um überschüssige Bewässerungsflüssigkeit von den Pflanzen abzustreifen; und/oder einem Sauger, um überschüssige Bewässerungsflüssigkeit abzusaugen, die sich in einer Rinne einer Auffangwanne sammelt.

Die mitfahrende Einheit entfernt überschüssige Bewässerungsflüssigkeit zuverlässig von den Pflanzen, wodurch die Bildung von Schimmel und anderen Feuchtigkeitsproblemen effektiv verhindert wird.

Diese Funktion erfolgt ohne zusätzlichen manuellen Aufwand, da der Gießwagen sich ohnehin in Längsrichtung bewegt, wodurch der manuelle Aufwand in der Pflanzenaufzucht weiter reduziert und der Arbeitsprozess effizienter gestaltet wird.

Vorzugsweise umfasst die Bewässerungsvorrichtung einen vertikal ausgerichteten Bewässerungsmast, der an der zugänglichen Regalseite angeordnet ist, wobei die Masthöhe vorzugsweise im Wesentlichen einer vertikalen (Gesamt-)Höhe des Regals entspricht. Der Mast kann mit dem Gießwagen über ein (im Wesentlichen horizontal verlaufendes) Verbindungselement verbunden und dazu ausgebildet sein, die Bewässerungsarme bzw. Bewässerungssprühdüsen aufzunehmen.

Durch die Anordnung des Bewässerungsmasts an der zugänglichen Regalseite sind die Komponenten gut erreichbar, was eine vereinfachte Wartung und eine verbesserte Handhabung der Bewässerungsvorrichtung ermöglicht.

Vorzugsweise weist die Regalanordnung eine vertikale (Gesamt-)Höhe auf, so dass jede der Regalebenen in einer für die manuelle Platzierung und Entfernung zugänglichen (Arm-) Reichweite angeordnet ist.

Manuelle Armreichweite bedeutet, dass jede Regalebene so positioniert sein kann, dass der Anwender sie bequem mit ausgestrecktem Arm, ohne auf Hilfsmittel (wie z.B. eine Leiter) zurückgreifen zu müssen, erreichen kann.

Alle Regalebenen sind leicht zugänglich und ermöglichen eine einfache manuelle Platzierung und Entnahme von Aufzuchtplatten.

Zusätzliche Hebehilfen oder Geräte werden vermieden, was insbesondere die Investitionsausgaben reduziert.

Vorzugsweise weist das Modul mindestens eine Auffangwanne, vorzugsweise für jede der Regalebenen eine Auffangwanne, die unterhalb der Aufzuchtplatten anzuordnen ist, auf, um überschüssige Bewässerungsflüssigkeit aufzunehmen. Insbesondere weist die Auffangwanne eine Rinne auf, um die aufgenommene überschüssige Bewässerungsflüssigkeit abzuführen.

Überschüssige Bewässerungsflüssigkeit wird effizient gesammelt und abgeleitet, wodurch ein Wasserstau in den Aufzuchtplatten vermieden wird. Dadurch wird die Bildung von Schimmel und anderen feuchtigkeitsbedingten Problemen (Botrytis) minimiert.

Das gesammelte Wasser kann wiederverwendet werden, was zu einer Senkung des Wasserverbrauchs führt.

Vorzugsweise weist jede der Auffangwannen ein in Richtung der zugänglichen Längsseite abfallendes Gefälle auf, wo insbesondere die Rinne angeordnet ist.

Das abfallende Gefälle sorgt für eine effiziente und kontinuierliche Ableitung überschüssiger Flüssigkeit durch Schwerkraft, wodurch der Wartungsaufwand reduziert wird, da keine zusätzlichen Pumpen oder mechanischen Komponenten erforderlich sind.

Vorzugsweise ist am Gießwagen, und insbesondere am Bewässerungsmast, zumindest eine mitfahrende Wasserschiebeeinheit angebracht, die dazu ausgebildet ist, die überschüssige Bewässerungsflüssigkeit in der Rinne der Auffangwanne entlang der Längsseite zu befördern.

Die mitfahrende Wasserschiebeeinheit reinigt die Rinnen während der Bewässerung, wodurch manuelle Eingriffe reduziert werden. Zudem wird die überschüssige Flüssigkeit gezielt entlang der Rinne transportiert, was Abfluss und Reinigung effizient kombiniert. Eine Pumpe wird nicht benötigt. Die Bewegung des Wagens wird genutzt, um das gesammelte Wasser (Nährlösung) zu einem (stirnseitigen) Sammelpunkt zu bewegen.

Vorzugsweise ist der längsbewegliche Gießwagen positioniert: oben auf dem Regal sitzend; unten in dem Regal sitzend; oder mitten in dem Regal sitzend.

Die flexible Positionierung des Gießwagens ermöglicht eine optimale Anpassung an verschiedene Regaltypen.

Vorzugsweise sind Führungsschienen (am Regal) vorgesehen, die dazu ausgebildet sind, eine Längsbewegung des Gießwagens zu führen.

Führungsschienen sorgen für eine geführte Längsbewegung des Gießwagens entlang der Regalanordnung. Der Wagen kann sich nicht ungewollt vom Regal entfernen. Die Prozesssicherheit wird dadurch erhöht und ermöglicht eine (Teil-)Automatisierung des Moduls. Der Gärtner kann das Modul hinsichtlich der Bewässerung sich selbst überlassen. Die Rinne könnte z.B. als Längsseitenführung verwendet werden.

Vorzugsweise umfasst der Gießwagen eine der nachfolgenden Komponenten: eine Zuführleitung zu den Bewässerungsarmen/Bewässerungssprühdüsen; einen Wassertank; ein Fahrgestell mit daran angebrachten Laufrädern; einen Fahrantrieb; eine Steuerung, insbesondere mit einem an die Steuerung koppelbaren Sensor; und/oder zumindest ein Führungsrad.

Der Fahrantrieb, in Kombination mit einer Steuerungseinheit und Sensoren, ermöglicht einen automatisierten Betrieb des Gießwagens. Dies reduziert den manuellen Aufwand und ermöglicht eine präzise, autonom gesteuerte Bewässerung über die gesamte Regalanordnung hinweg. Beispielsweise kann die Bewässerung mittels einer Zeitschaltuhr zeitgesteuert aktiviert werden.

Angebrachte Sensoren können kontinuierlich die Bedürfnisse der Pflanzen (Feuchte, Temperatur, etc.) überwachen und die Bewässerung entsprechend anpassen. Dadurch wird eine Über- oder Unterbewässerung vermieden. In der Steuerung können entsprechende Bewässerungspläne hinterlegt sein.

Das Führungsrad sorgt für eine zusätzliche Stabilität des Gießwagens, indem es das Kippen oder Umfallen des Wagens während der Längsbewegung entlang der Regalanordnung verhindert.

Vorzugsweise ist die Regalanordnung stationär angeordnet und jede der Regalebenen ist ausgebildet, die Aufzuchtplatten stationär aufzunehmen.

Die stationäre Regalanordnung reduziert Belastungen, die durch dynamische Bewegungen entstehen, was die Langlebigkeit der Regalanordnung erhöht und den Wartungsaufwand minimiert. Das (schwere und große) Regal muss nicht an der Bewässerung vorbeigeführt werden. Das Regal muss nicht angetrieben werden. Energie kann gespart werden. Der Steuerungsaufwand ist minimiert.

Durch den Verzicht auf komplexe Automatisierung des Regals und durch den Einsatz einfacher Komponenten im Regalsystem wird die Umsetzung kostengünstiger und weniger komplex.

Vorzugsweise ist das Modul zur Aufzucht von wurzellosen Stecklingen ausgebildet, deren Wurzeln an einem Ende eines Aufzuchtzyklus aus einer Unterseite der Aufzuchtplatten herausragen.

Beispielsweise kann das Modul zur Aufzucht von Kräuterstecklingen verwendet werden. Kräuterstecklinge sind abgeschnittene, wurzellose Pflanzenteile, die zur Vermehrung von Kräutern wie bspw. Basilikum oder Minze verwendet werden können. Nach der Bildung von Wurzeln entwickeln sich die Stecklinge zu Kräuterjungpflanzen, die als eigenständige Pflanzen weiterwachsen und für den Anbau verwendet werden können.

Die offene Unterseite der Aufzuchtplatten ermöglicht einen ungehinderten Abfluss von überschüssigem Wasser sowie das Austreten der wachsenden Wurzeln.

Ferner wird die Aufgabe durch ein Pflanzenaufzucht-System gelöst, das ein Gewächshaus umfasst, in welches ein (insbesondere eingehaustes) Pflanzenaufzucht-Modul und eine Klimatisierung mit einer Belüftungseinheit und/oder einer Beheizungseinheit integriert ist.

Das Modul kann in ein bestehendes Gewächshaus eingebaut werden. Es lässt sich leicht aufbauen und benötigt wenig Platz.

Das Modul kann die Klimatisierung des (bestehenden) Gewächshauses nutzen, wodurch ein Energiebedarf, die Heizkosten und der Wasserbedarf reduziert werden können. Insbesondere nutzt das Modul die beheizte und befeuchtete Luft des Gewächshauses. Das Modul kann auf eine entsprechende eigene Sensorik verzichten, da die Sensorik des Gewächshauses mitgenutzt wird. Das gilt auch für die Heizung.

Zusätzlich trägt die abgeführte feuchte Luft aus dem Modul zur Verbesserung der Klimabedingungen im Gewächshaus (System) bei, was einen Synergieeffekt zwischen beiden Einheiten erzeugt.

Idealerweise reicht die Klimatisierung des Gewächshauses aus, wodurch auf eine eigene Klimatisierung des Moduls verzichtet werden kann, was sowohl zur Senkung der Investitions- als auch Betriebskosten führt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen des vorliegenden Konzepts zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines Pflanzenaufzucht-Moduls gemäß einem Ausführungsbeispiel der vorliegenden Erfindung;
- Fig. 2: ein allgemeingültiges Blockdiagramm des Pflanzenaufzucht-Moduls gemäß der Fig. 1;
- Fig. 3: eine schematische Seitenansicht (Fig. 3A) des Moduls mit Bewässerungsarmen und eine schematische Seitenansicht (Fig. 3B) des Moduls mit Bewässerungssprühdüsen;
- Fig. 4: eine schematische Seitenansicht des Regals der Fig. 1, wobei eine Auffangwanne zur Ableitung überschüssiger Bewässerungsflüssigkeit veranschaulicht ist;
- Fig. 5: eine perspektivische Ansicht einer Variante der Abführleitung des Moduls;
- Fig. 6: eine perspektivische Ansicht einer Ausführungsform einer Aufzuchtplatte (Fig. 6A) und eine Seitenansicht im Schnitt dieser Aufzuchtplatte (Fig. 6B);
- Fig. 7: eine schematische Seitenansicht des Regals der Fig. 1 mit verschiedenen Gießwagenpositionen;
- Fig. 8: eine perspektivische Ansicht einer Rückseite des Moduls der Fig. 1;
- Fig. 9: eine perspektivische Ansicht des Pflanzenaufzucht-Systems inklusive eines eingehausten Moduls;
- Fig. 10: ein allgemeingültiges Blockdiagramm eines Pflanzenaufzucht-Systems, das ein Modul gemäß Fig. 2 umfasst; und
- Fig. 11: eine schematische Seitenansicht einer weiteren Ausführungsform des Pflanzenaufzucht-Moduls.

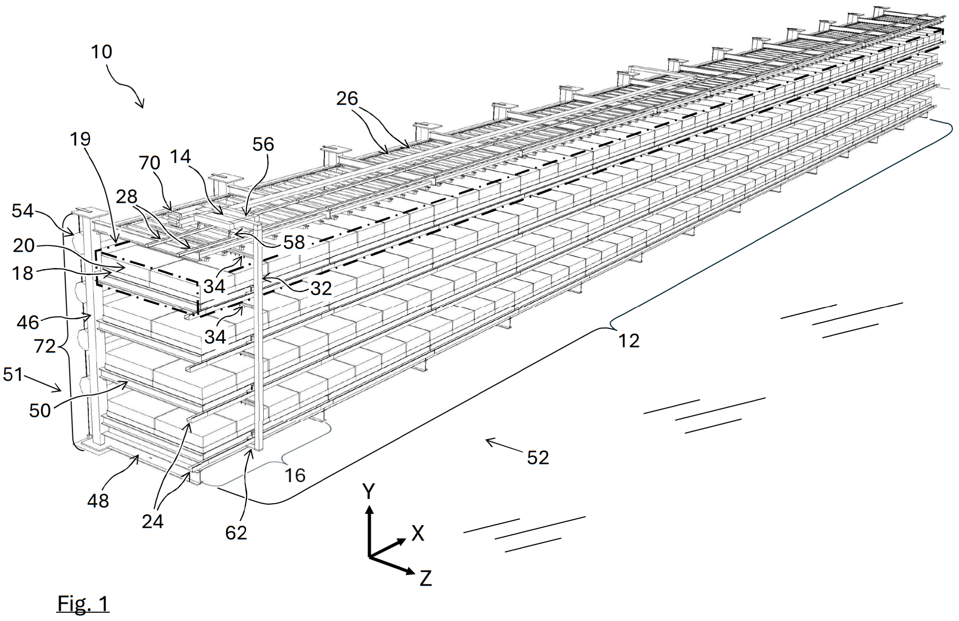

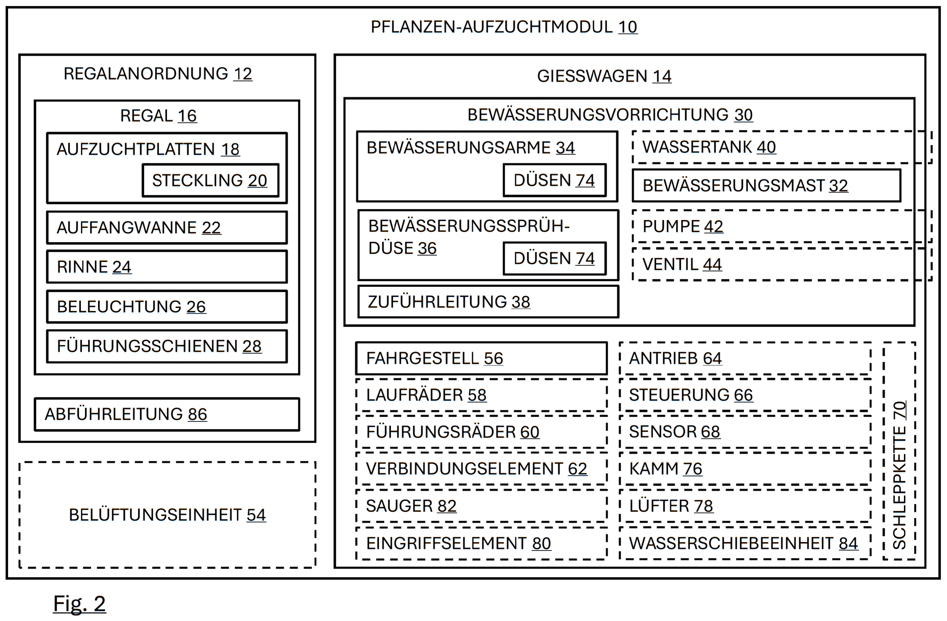

Fig. 1 und Fig. 2 zeigen in gleicher Weise eine Struktur eines Moduls 10 gemäß der vorliegenden Erfindung.

Fig. 1 zeigt eine perspektivische Ansicht einer ersten Ausführungsform eines speziellen Pflanzenaufzucht-Moduls 10, das allgemeiner in Form eines Blockdiagramms in Fig. 2 gezeigt ist. Die nachfolgende Beschreibung erfolgt unter gleichzeitiger Bezugnahme auf das spezielle Modul 10 der Fig. 1 und auf das allgemeinere Modul 10 der Fig. 2.

Beide Figuren zeigen das Modul 10, das eine Regalanordnung 12 und einen Gießwagen 14 aufweist.

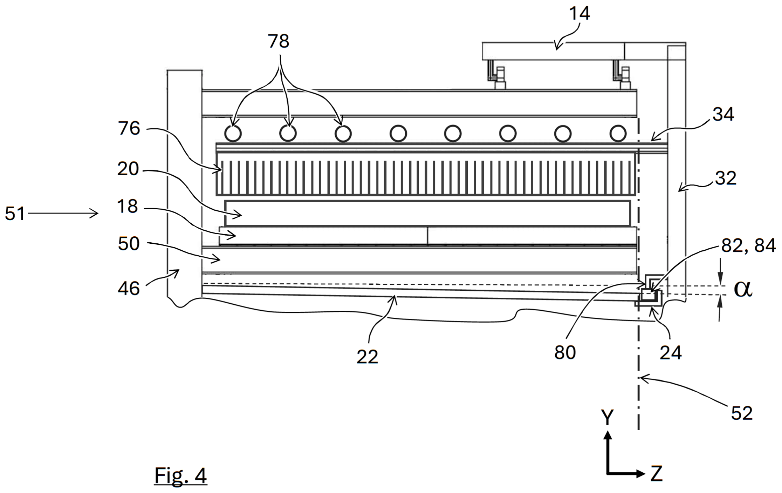

Die Regalanordnung 12 umfasst ein oder mehrere Regale 16, die dazu eingerichtet sind, Aufzuchtplatten 18 mit (darin eingesetzten) Stecklingen 20 aufzunehmen. In jeder Regalebene 19 können Auffangwannen 22 (vgl. Fig. 2 und Fig. 4) unter den Aufzuchtplatten 18 angeordnet sein, die überschüssige Bewässerungsflüssigkeit aufnehmen und in einer (optionalen) Rinne 24 der Auffangwanne 22 sammeln. Darüber hinaus kann jede Aufzuchtplatte 18 einer Ebene 19 durch Beleuchtungsmittel 26 beleuchtet werden. Führungsschienen 28 können an den Regalen 16 angebracht sein, um den Gießwagen 14 bei seiner Bewegung entlang einer (offenen und frei zugänglichen) Längsseite 52 (mechanisch) zu führen.

Der Gießwagen 14 umfasst eine Bewässerungsvorrichtung 30 mit einem (vertikalen) (Bewässerungs-)Mast 32. An diesem Mast 32 können Bewässerungsarme 34 und/oder Bewässerungssprühdüsen 36 angebracht sein. Eine Zuführleitung 38 kann mit dem Gießwagen 14 verbunden und dazu eingerichtet sein, Bewässerungsflüssigkeit (Wasser ggf. inkl. Nährstoffen) aus einem (externen) Wassertank 40 z.B. mittels einer Pumpe 42 kontrolliert über ein Ventil 44 zum Gießwagen 14 zu befördern, vgl. Fig. 2. Der Wagen 14 kann den Tank 40 auch mit sich führen, so dass auf eine Zuführleitung 38 verzichtet werden kann. Die Zuführleitung 38 kann als Rückführleitung ausgebildet sein, wie es später noch erläutert wird.

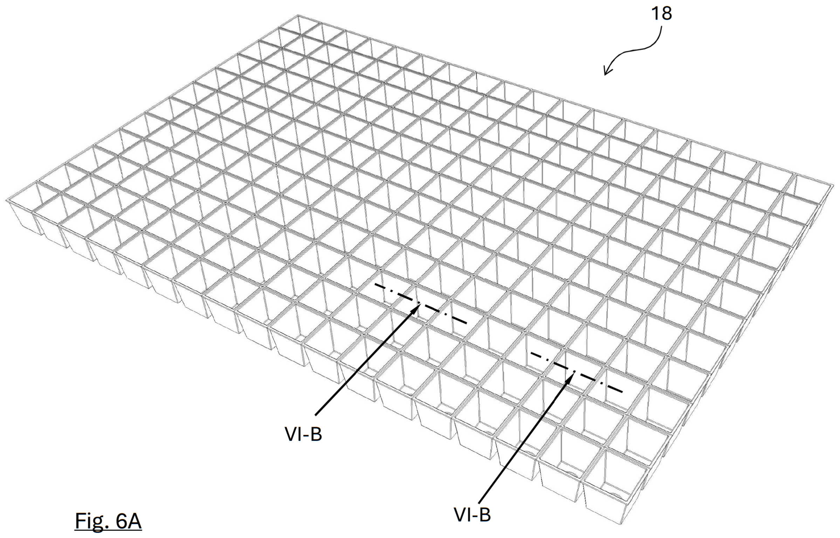

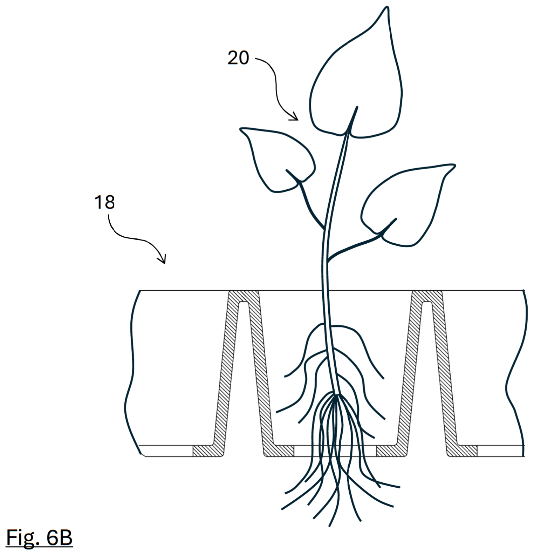

Fig. 1 zeigt eine Ausführungsform der Regalanordnung 12, die z.B. ein (einziges) Regal 16 aufweist, das (vertikale) Regalsteher 46 umfassen kann, die sich entlang der Höhenrichtung Y erstrecken und an denen sowohl (optionale) Fußständer 48 als auch eine Vielzahl von Kragarmen 50 angebracht sein können. Über nicht explizit dargestellte Horizontalverbinder bzw. Querstreben können z.B. zwei der (hinteren) Regalsteher 46 entlang der Längsrichtung X des Regals 16 bzw. der Regalanordnung 12 insbesondere horizontal miteinander verbunden werden. Sowohl die Steher 46 als auch die Kragarme 50 sind entlang der X-Richtung, vorzugsweise in gleichmäßigem Abstand zueinander, angeordnet, um die Aufnahme von Aufzuchtplatten 18 nebeneinander (in X-Richtung), übereinander (in Y-Richtung) und/oder hintereinander (in Z-Richtung) zu ermöglichen. Die Aufzuchtplatten 18 werden unter Bezugnahme von Fig. 6A und Fig. 6B noch näher beschrieben werden. Die Regalsteher 46 sind vorzugsweise (ausschließlich) an einer hinteren bzw. unzugänglichen Längsseite 51 des Regal 16 angeordnet (vgl. Fig. 1).

Alternativ könnte das Regal 16 an einer Wand befestigt sein, wobei die Wand die Funktion der Regalsteher 46 und Fußständer 48 übernimmt. In dieser Ausführungsform werden die Kragarme 50 direkt an der Wand befestigt, sodass die Trag- und Stützfunktion des Regals 16 durch die Wandkonstruktion bereitgestellt wird.

Allgemein gilt, dass eine Längsseite des quaderförmigen Regals 16 der langen Seite des Regals 16 entspricht. Diese liegt in der XY-Ebene. Im Gegensatz dazu befinden sich die Stirnseiten des Regals 16, die als kurze Seiten ausgebildet sind, in der YZ-Ebene.

Vorzugsweise sind die Kragarme 50 in der Y-Richtung gleichmäßig beabstandet. Die Kragarme 50 definieren die Ebenen 19-1 bis 19-4. Zwei in X-Richtung benachbarte Kragarme 50, die sich in der gleichen vertikalen (Regal-)Ebene 19 befinden, bilden eine Auflagefläche, auf der ein oder mehrere der Aufzuchtplatten 18 mit kultivierten Stecklingen 20 platziert werden können. Alternativ können die Aufzuchtplatten 18 z.B. auch auf nicht explizit dargestellten Gittern, Fachböden, Längsträgern o.Ä. stehen, die durch zwei in X-Richtung benachbarte Kragarme 50 gehalten werden können. Dadurch ist es möglich, mehrere Aufzuchtplatten 18 nebeneinander in Längsrichtung X und/oder in der Tiefenrichtung Z zwischen zwei Kragarmen 50 zu platzieren. Bevorzugt werden die Platten 18 doppelttief gelagert, wie in Fig. 1 veranschaulicht.

Über den Aufzuchtplatten 18 können, insbesondere in jeder Ebene 19, eine Vielzahl von Beleuchtungsmitteln 26 parallel zueinander entlang der Längsrichtung X angeordnet befestigt werden. Die Beleuchtung erstreckt sich vorzugsweise in der Querrichtung Z. Dadurch kann eine gleichmäßige Beleuchtung der Stecklinge 20 über die gesamte Fläche der Aufzuchtplatten 18 erzeugt werden.

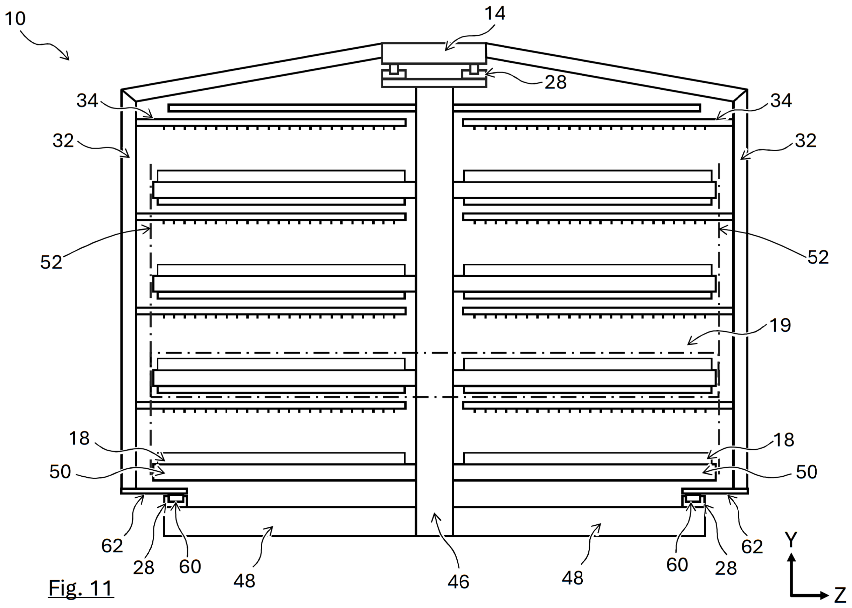

Das Regal 16 kann als (einseitiges) Kragarmregal, ein doppelseitiges Kragarmregal (vgl. Fig. 11) oder als jedes andere Regalsystem ausgeführt sein, das (mindestens) eine offene und zugängliche Längsseite 52 aufweist. Dies bedeutet insbesondere, dass das bzw. die Regale 16 auch vordere Steher 46 aufweisen kann, die in Fig. 1 nicht veranschaulicht sind, wobei die vorderen Steher 46 in der Längsrichtung X ausreichend weit voneinander entfernt sein sollten, um den Wagen 16 während seiner (Bewässerungs-)Fahrt entlang der Längsseite 52 - also während einer Längsbewegung - nicht zu stören.

Ein Kragarmregal ist ein Regal, das zumindest zwei vertikale Steher aufweist, die in einer Flucht bzw. entlang einer (einzigen) (Längs-)Seite angeordnet sind. An diesen Stehern sind horizontal auskragende Arme befestigt, die die Güter tragen. Im Gegensatz dazu erfordern herkömmliche Regale zumindest vier vertikale Steher, die ein rechteckiges Stützgerüst bilden.

Die zugängliche Längsseite 52 des Regals ist üblicherweise die Seite des bzw. der Regale 16, von der aus die Aufzuchtplatten 18 in dem bzw. den Regalen 16 platziert und aus ihnen wieder entnommen bzw. entfernt werden können, was üblicherweise manuell erfolgt. Im Gegensatz dazu kann eine unzugängliche Längsseite 51 des Regals 16 die Seite sein, die für den Anwender (z.B. Betreiber einer Gärtnerei) nicht zugänglich ist und von der aus die Aufzuchtplatten 18 nicht direkt bearbeitet werden können. Diese Seite 51 kann bspw. zu einer Wand hin ausgerichtet sein, die Regale 16 können an dieser Seite 51 fest mit der Wand verbunden werden, um die Stabilität der Regalanordnung 12 zu erhöhen, oder dort können andere Komponenten des Moduls 10 vorgesehen sein, wie z.B. Belüftungsrohre, auf die später noch näher eingegangen werden wird.

Besondere Vorteile bei der Wahl einer zugänglichen Längsseite 52 sind: einfaches manuelles Einsetzen und Herausnehmen der Aufzuchtplatten 18; ungehinderter Zugriff in jede Ebene 19 von der zugänglichen Seite 52; einfache manuelle Wartung und Reinigung der Regalelemente (Auffangwanne 22, Beleuchtungsmittel 26) sowie des Gießwagens 14. Dies bedeutet mit anderen Worten, dass die Platten 18 von dieser Seite 52 für den Gärtner ergonomisch gut erreichbar sein sollten, insbesondere, dass der Gärtner nicht auf unterstützende Hilfsmittel (z.B. eine Leiter) zurückgreifen muss oder durch andere Komponenten des Moduls 10 daran gehindert wird, die Platten 18 zu platzieren oder zu entfernen bzw. die Stecklinge 20 zu behandeln (z.B. schneiden, reinigen, ausrichten, etc.).

Eine oder mehrere Belüftungseinheiten 54 können optional an oder bei der Regalanordnung 12 (insbesondere an der unzugänglichen Seite 51) vorgesehen sein, oder auch außerhalb des Moduls 10 an einer Wand, an einer Decke oder freistehend angeordnet sein. Die Belüftungseinheit 54 ist dazu eingerichtet, kontrollierte Temperatur- und Luftfeuchtigkeitsbedingungen innerhalb des Moduls 10 bereitzustellen. Die Belüftung des Moduls kann bspw. alle zwei Tage für einen definierten Zeitraum, wie etwa zwei Stunden, aktiviert werden.

Vorzugsweise verbleibt die Regalanordnung 12 während der gesamten Pflanzenaufzucht stationär an ihrem Aufstellungsort. Ebenso sollen/können die manuell in das Regal 16 eingesetzten Aufzuchtplatten 18 stationär im Regal gehalten werden. Durch diese Anordnung kann auf komplexe Automatisierung verzichtet werden, wodurch einfachere und kostengünstigere Komponenten für die Regalanordnung 12 verwendet werden können.

Der Gießwagen 14 kann ein Fahrgestell 56 mit daran befestigten Laufrädern 58 umfassen. Anstatt Rädern könnte auch ein Zahnradmechanismus verwendet werden.

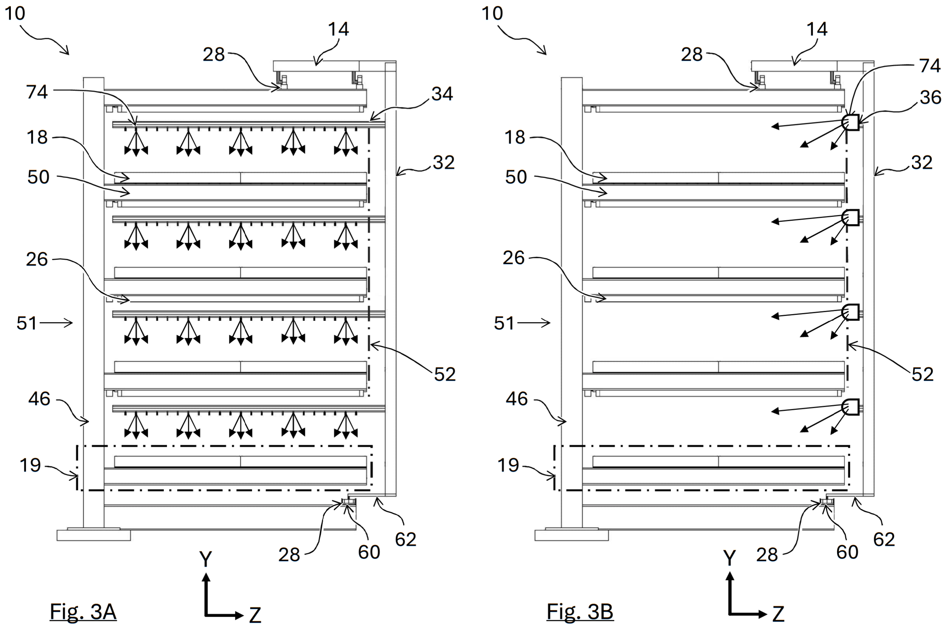

Über die Führungsschienen 28 kann der Gießwagen 14 entlang der Regalanordnung 12 in Längsrichtung X geführt bewegt werden. Der Gießwagen 14 kann zudem zumindest ein Führungsrad 60 umfassen, siehe Fig. 3, das über zumindest ein Verbindungselement 62 (z.B. ein einen Steg, eine Strebe, o.Ä.), das vorzugsweise am Bewässerungsmast 32 befestigt ist, mit dem Gießwagen 14 verbunden sein kann (vgl. Fig. 2). Das Führungsrad 60 ist so ausgebildet, dass es die Längsbewegung des Gießwagens 14 stabilisiert, indem es das durch den Bewässerungsmast 32 und die daran montierten Bewässerungsarme 34 bzw. Bewässerungssprühdüsen 36 erzeugte Drehmoment ausgleicht und ein Kippen (um die Längsrichtung/X-Richtung) des Gießwagens 14 verhindert (vgl. Fig.3).

Der Gießwagen 14 kann ferner einen Antrieb 64, eine Steuerung 66 und/oder zumindest einen mit der Steuerung gekoppelten Sensor 68 umfassen (vgl. Fig. 2). Die Steuerung 66 ist zwecks Austauschs von Daten, Signalen und/oder Befehlen mit dem Antrieb 64 verbunden und verarbeitet Sensorsignale von dem zumindest einen Sensor 68, bspw. von einem Wegmesssensor. Die Steuerung 66 erzeugt daraufhin Steuersignale zur Steuerung des Gießwagens 14, insbesondere zur Steuerung einer Bewässerungsmenge pro Wegeinheit. Eine Energieversorgung des Gießwagens 14 kann z.B. über eine mitgeführte Schleppkette 70 erfolgen (vgl. Fig. 1). Diese Anordnung ermöglicht einen automatisierten Betrieb des Gießwagens 14.

Der automatisierte Betrieb des Gießwagens 14 kann eine selbstständige (und präzise) Bewässerung der Aufzuchtplatten 18 (Stecklinge 20) ermöglichen. Die Steuerung 66 des Gießwagens 14 aktiviert hierbei den Antrieb 64, um den Gießwagen 14 entlang der Regalanordnung 12 zu bewegen. Gleichzeitig wird die Bewässerung automatisch eingeleitet (und fortgesetzt), indem der Betrieb der Pumpe 42 sowie das Öffnen und Schließen von Ventilen 44, bspw. von Magnetventilen, gesteuert wird. Dadurch wird die Bewässerungsflüssigkeit aus dem Wassertank 40 zu den Bewässerungsarmen 34 bzw. Bewässerungssprühdüsen 36 gefördert. Die Bewässerungsarme 34 bzw. -sprühdüsen 36 sind so ausgelegt, dass sie eine gleichmäßige Bewässerung aller Aufzuchtplatten 18 in jeder Ebene 19, oder alternativ eine gezielte Bewässerung einzelner Ebenen 19, durchführen können. Dies ermöglicht eine bedarfsgerechte Bewässerung, um sowohl den Wasserverbrauch zu reduzieren als auch den spezifischen Bedürfnissen der Pflanzen (z.B. spezifische Feuchtigkeitsniveaus) in unterschiedlichen Entwicklungsstadien gerecht zu werden.

Alternativ dazu kann der Gießwagen 14 auch manuell bewegt und/oder die Bewässerung manuell eingeleitet und durchgeführt werden.

Alternativ zur Bewässerungsflüssigkeit kann auch gesammeltes Regenwasser zur Bewässerung der Aufzuchtplatten 18 verwendet werden.

Die Bewässerung kann bspw. alle zwei Tage erfolgen, um eine regelmäßige und gleichmäßige Versorgung der Pflanzen mit Wasser und Nährstoffen zu gewährleisten. Das Intervall kann jedoch je nach Pflanzenart und Wachstumsfortschritt angepasst werden, um den spezifischen Bedürfnissen der Pflanzen optimal zu entsprechen.

Der Bewässerungsmast 32, der mit dem Gießwagen 14 verbunden ist, erstreckt sich im Wesentlichen vertikal entlang dem Regal 16 (vgl. Fig. 1 und 3). Vorzugsweise kann der Bewässerungsmast 32 im Wesentlichen entlang einer vertikalen Gesamthöhe 72 (vgl. Fig. 1) des Regals 16 verlaufen.

Am Bewässerungsmast 32 können die Bewässerungsarme 34 (horizontal auskragend und mit den Regalebenen 19 kämmend) angebracht sein. Die Arme 34 können sich in Tiefenrichtung Z über eine gesamte Länge der Aufzuchtplatten 18 erstrecken (vgl. Fig. 1 und 3A). Vorzugsweise sind genau so viele Arme 34 wie Regalebenen 19 vorgesehen. Ergänzend oder alternativ zu den Armen 34 können Bewässerungssprühdüsen 36 am Bewässerungsmast 32 angebracht sein, die insbesondere außerhalb des Regals 16 verbleiben (vgl. Fig. 3B). Die Bewässerungsarme 34 werden unter Bezugnahme von Fig. 3A und die Bewässerungssprühdüsen 36 unter Bezugnahme von Fig. 3B noch näher beschrieben werden.

Der Mast 32 kann ferner mehrteilig und/oder höhenverstellbar bzw. ausfahrbar ausgebildet sein, insbesondere wenn die Anzahl an Bewässerungsarmen 34 bzw. Bewässerungssprühdüsen 36 kleiner ist als die Anzahl an Ebenen 19 im Regal 16. In diesen Fall kann der Mast 32 z.B. erste und zweite Abschnitte (nicht veranschaulicht) aufweisen, wobei die Arme 34 und/oder Düsen 36 an einem der Abschnitte angeordnet sind, der in Höhenrichtung Y beweglich am anderen Abschnitt gelagert ist. Es kann ein Verstellmechanismus (Steuerung, Antrieb, etc.) vorgesehen sein, um die Abschnitte gegeneinander zu bewegen, so dass alle Regalebenen 19 bewässert werden können. Wenn z.B. halb so viele Arme 34 bzw. Düsen 36 wie Ebenen 19 vorhanden sind, könnten die oberen Ebenen 19 während einer Längsbewegung des Wagens 14 in der positiven X-Richtung und die restlichen unteren Ebenen 19 während einer Bewegung des Wagens 14 zurück, d.h. in der negativen X-Richtung, bewässert werden, nachdem der entsprechende Mastabschnitt entsprechend in der Höhe verstellt wurde.

Sowohl die Bewässerungsarme 34 als auch die Bewässerungssprühdüsen 36 können eine Vielzahl von Öffnungen, insbesondere integrierten Düsen 74 (vgl. Fig. 3), umfassen, die dazu eingerichtet sind, eine vollflächige Bewässerung der Aufzuchtplatten 18 von der zugänglichen Längsseite 52 aus durchzuführen. Vollflächig bedeutet, dass die gesamte Oberfläche aller Aufzuchtplatten 18 im Regal 16 in der XZ-Ebene mit Bewässerungsflüssigkeit erreicht wird.

Die Bewässerungsarme 34 bzw. die Bewässerungssprühdüsen 36 können (z.B. um die Y-Achse) schwenkbar ausgebildet sein, um Stehern 46 an der zugänglichen Längsseite 52 während einer Längsbewegung des Gießwagens 14 auszuweichen. Dies bedeutet mit anderen Worten, dass die Regale 16 nicht zwingend ein Kragarmregal sein müssen. Es können auch gewöhnliche Regale 16 mit vorderen und hinteren Stehern 46 (z.B. Fachbodenregale) verwendet werden, wobei der Wagen 14 bzw. dessen Bewässerungsvorrichtung 30 dennoch die (hier nicht veranschaulichten) vorderen Steher 46 während des Bewässerungsvorgangs passieren kann.

Besondere Vorteile des längsbeweglichen Gießwagens 14 sind: ein einzelner Wagen 14 genügt, um alle Platten 18 (sukzessive) zu bewässern, wodurch nicht für jede Aufzuchtplatte 18 (in jeder Ebene 19) ein eigener Arm 34 erforderlich ist; reduzierte Investitionsausgaben, da kein vollflächiger Ausbau der Bewässerung notwendig ist, sowie geringere Wartungs- und Reparaturkosten durch die Nutzung eines einzigen Wagens 14; flexibel einsetzbar, da der Gießwagen 14 sowohl manuell (besonders kostengünstig) als auch automatisiert betrieben werden kann; im automatisierten Betrieb wird eine optimale Bewässerung ermöglicht, sodass Stecklinge 20 ohne manuelle Bewässerung bis zur Wurzelbildung heranwachsen können; der Wagen 14 könnte zwischen mehreren Regalen 16 umgesetzt werden, so dass ein oder wenige Wagen 14 für viele Regale 16 nutzbar sind.

Überschüssige Bewässerungsflüssigkeit, die sich auf den Pflanzen 20 ablagert, kann durch mindestens einen (optional vorgesehenen) Kamm 76 und/oder Lüfter 78, vgl. Fig. 2 und Fig. 4, vorzugsweise in jeder der Ebenen 19 abgeführt werden. Der Kamm 76 kann z.B. aus flexiblen Gewebestreifen gebildet sein, die in der Querrichtung z nebeneinander angeordnet sind und vertikal nach unten hängen, um die Pflanzen 20 von oben und/oder seitlich zu berühren. Vorzugsweise ist der Kamm 76 stromaufwärts zu den Armen 34 angeordnet. Gleiches gilt für den Lüfter 78. Der Kamm 76 und/oder der Lüfter 78 können an einer der folgenden Einheiten befestigt sein: dem Bewässerungsmast 32; den Bewässerungsarmen 34; und/oder den Bewässerungssprühdüsen 36.

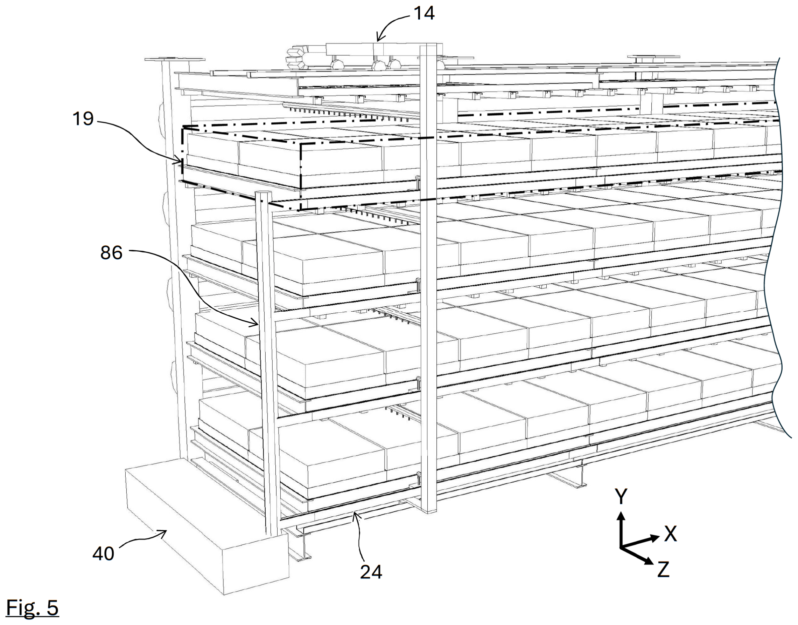

Komponenten der Bewässerungsvorrichtung 30 können sowohl am Gießwagen 14 befestigt oder unabhängig vom Gießwagen 14 extern angeordnet sein (vgl. Fig. 2 und Fig. 5). Dazu gehören u.a.: der Wassertank 40, die Pumpe 42, und/oder die Ventile 44.

Der Wassertank 40 ist dazu eingerichtet, die Bewässerungsflüssigkeit zu speichern. Dieser kann je nach Bedarf an unterschiedlichen Positionen angeordnet werden, bspw. auf dem Boden neben dem Regal 16, in einer definierten vertikalen Höhe neben dem Regal 16 oder direkt auf dem Regal 16. Durch die entsprechende Höhenanordnung kann ein statischer Druck genutzt werden, um die Bewässerungsflüssigkeit über die Zuführleitung 38 zum Gießwagen 14 zu befördern.

Eingriffselemente 80 können an dem Bewässerungsmast 32 angebracht sein und greifen in jede der Ebenen 19 von oben in die Rinne 24 der Auffangwanne 22 ein.

An dem Eingriffselement 80 kann wahlweise einen Sauger 82 oder eine Wasserschiebeeinheit 84 befestigt werden.

Der Sauger 82 ist dazu eingerichtet, überschüssige Bewässerungsflüssigkeit, die sich in der Rinne 24 der Auffangwanne 22 sammelt, aufzusaugen und die Flüssigkeit entweder über eine Abführleitung 86 (vgl. Fig. 5) abzuleiten und/oder in den Tank 40 zurückzuführen. Die Rinne 24 kann (auch) als Abführleitung 86 genutzt werden. Die Abführleitung 86 ist dazu eingerichtet, überschüssige Bewässerungsflüssigkeit entweder zurück zum Wassertank 40 zu leiten, zu einer tiefergelegenen Rinne 24 zu leiten und/oder aus dem Modul 10 abzuleiten.

Die Wasserschiebereinheit 84 ist dazu eingerichtet, überschüssige Bewässerungsflüssigkeit in der Rinne 24 der Auffangwanne 22 mit der Längsbewegung des Gießwagens 14 in Richtung der Abführleitung 86 zu befördern (vgl. Fig. 4). Die Einheit 84 ist insbesondere eingerichtet, möglichst formschlüssig in die Rinne 24 einzugreifen. Die Einheit 84 kann z.B. bürstenartig ausgebildet sein.

Nachfolgend werden zwei Arten der Bewässerung der Platten 18 unter Bezugnahme auf die Fig. 3A und 3B näher beschrieben. Beide Figuren zeigen das Modul 10 schematisch in einer Seitenansicht.

Fig. 3A veranschaulicht, dass die Aufzuchtplatten 18 von oben über Bewässerungsarme 34 vollflächig beregnet werden. Die Bewässerungsarme 34 erstrecken sich vom Bewässerungsmast 32 (nahezu) vollständig in Tiefenrichtung Z über die Aufzuchtplatten 18 in jeder Ebene 19.

Fig. 3B zeigt, dass die Aufzuchtplatten 18 von der offen zugänglichen Längsseite 52 in der Tiefenrichtung Z über Bewässerungssprühdüsen 36 seitlich besprüht werden. Die Bewässerungssprühdüsen 36 sind am Bewässerungsmast 32 befestigt und können teilweise in das Regal 16 hineinragen. Im Wesentlichen befinden sich die Düsen 36 außerhalb des Regals 16, was eine Wartung vereinfacht, weil sie besser zugänglich sind.

Ferner veranschaulichen Fig. 3A und Fig. 3B die Stabilisierung der Längsbewegung des Gießwagens 14 gegen ein seitliches Kippen, d.h. eine Drehung um die Längsrichtung X. Das Führungsrad 60 kann über ein Verbindungselement 62 (z.B. einen Steg, eine Strebe, o.Ä.) mit dem Bewässerungsmast 32 verbunden sein. Dieses Rad 60 kann in eine Führungsschiene 28 eingreifen, die z.B. unterhalb des Regals 16 angeordnet sein kann. Die Schiene 28 kann auch im Boden neben dem Regal 16 positioniert sein. Eine Verbindung mit dem Regal 16 ist aber bevorzugt.

Nachfolgend werden verschiedene Varianten zur Entfernung überschüssiger Bewässerungsflüssigkeit innerhalb des Moduls 10 näher beschrieben.

Fig. 4 zeigt einen Ausschnitt des Moduls 10 der Fig. 1 in einer schematischen Seitenansicht. Es sind der Gießwagen 14 mit dem Bewässerungsmast 32 und einem der Bewässerungsarme 34 dargestellt. Der Gießwagen 14 ist in diesem Fall dazu eingerichtet, nach einem Bewässerungsdurchlauf überschüssige Bewässerungsflüssigkeit von den Stecklingen 20 zu entfernen. Hierzu können am den Bewässerungsarmen 34 jeweils ein Kamm 76 und/oder ein Lüfter 78 befestigt sein.

Der Kamm 76 ist vorzugsweise dazu eingerichtet, über die Stecklinge 20 zu streifen und bei einer Längsbewegung des Gießwagens 14 die Stecklinge 20 in Bewegung zu versetzen, so dass die überschüssige Bewässerungsflüssigkeit auf den Stecklingen 20 abgeschüttelt wird.

Der Lüfter 78 ist dazu ausgelegt, einen Luftstrom zu erzeugen, der die Stecklinge 20 in Bewegung versetzt und überschüssige Bewässerungsflüssigkeit abschüttelt und/oder direkt von den Stecklingen 20 herunter bläst.

Überschüssige Bewässerungsflüssigkeit, die durch die vorzugsweise nach unten offenen Aufzuchtplatten 18 (vgl. Fig. 4) fließt und an einer Unterseite der Aufzuchtplatte 18 abtropfen kann, kann in jeder der Ebenen 19 durch eine darunter angeordnete Auffangwanne 22 aufgenommen werden. Die Auffangwanne 22 weist insbesondere ein Gefälle auf, das in Richtung der zugänglichen Längsseite 52 abfällt. Dadurch ergibt sich ein Neigungswinkel α, der eine schwerkraftbedingte Abführung der Flüssigkeit unterstützt. Der Neigungswinkel α der Auffangwanne 22 kann je nach Ausführungsform des Moduls 10 in einem Bereich von 5° bis 15° eingestellt werden, um eine effektive Abführung der überschüssigen Bewässerungsflüssigkeit zu ermöglichen.

Die Rinne 24 kann an einem unteren Ende der Wanne 22 angeordnet sein. Die Rinne 24 kann waagerecht orientiert sein und erstreckt sich vorzugsweise parallel zur Längsseite 52. Die in der Rinne 24 der Auffangwanne 22 gesammelte Bewässerungsflüssigkeit kann durch den Sauger 82 und/oder (pumpenfrei) durch die Wasserschiebereinheit 84 abgeleitet werden. So wird eine Algenbildung vermieden.

Die Einheit 84 kann formschlüssig in die Rinne 24 eingreifen. Die Einheit 84 kann bürstenartig ausgebildet sein. Die Einheit 84 kann gedämpft gelagert sein, um die Rinne 24 nicht zu beschädigen. Die Einheit 84 bewegt sich durch die Rinne 84, indem der Wagen 14 entlang der Längsseite 52 des Regals 16 bzw. der Anordnung 12 bewegt wird, was energieeffizient ist.

Besondere Vorteile dieser Anordnung sind: überschüssige Bewässerungsflüssigkeit kann durch die Öffnung der Aufzuchtplatten 18 fließen und in der Auffangwanne 22 gesammelt werden; die Neigung der Auffangwanne 22 ermöglicht das Ablaufen der Bewässerungsflüssigkeit in die Rinne 24 ohne zusätzliche mechanische Unterstützung; die angesammelte Flüssigkeit wird sowohl von der Oberfläche der Stecklinge 20 als auch aus der Aufzuchtplatte abgeführt, wodurch stagnierende Feuchtigkeit und Schimmelbildung reduziert werden. Der Kamm 76 und der Lüfter 78 tragen zusätzlich überschüssige Flüssigkeit ab und reduzieren so die Feuchtigkeitsbildung.

Nachfolgend wird unter Bezugnahme auf Fig. 5 eine Variante zur Ableitung der überschüssigen Bewässerungsflüssigkeit über die (optionale) Abführleitung 86 näher beschrieben. Die Figur 5 zeigt das Modul 10 der Fig. 1 und 2 perspektivisch in einer Seitenansicht.

Vorzugsweise kann die Bewässerungsflüssigkeit innerhalb der Rinne 24 auf jeder der Ebenen 19 mechanisch mittels der Wasserschiebeeinheit 84 in Richtung der Abführleitung 86 bewegt werden. Ergänzend oder alternativ weist jede der Rinnen 24 entlang der zugänglichen Längsseite 52 ein Gefälle in Richtung eines Orts der Abführleitung 86, also z.B. in Richtung einer Regalstirnseite, auf.

Die Rinnen 24 können über eine lösbare Verbindung mit der Abführleitung 86 verbunden sein, die es ermöglicht, die Abführleitung 86 bei Bedarf zu trennen, um sie zu reinigen, zu warten oder auszutauschen.

Fig. 5 zeigt, dass die Abführleitung 86 in einen der Wassertanks 40 münden/führen kann, wobei dieser bspw. als (transportabler) Kanister ausgebildet sein kann, in dem die überschüssige Bewässerungsflüssigkeit eingeleitet und gespeichert werden kann.

Alternativ dazu kann in einer Variante die Bewässerungsflüssigkeit über die Abführleitung 86 in eine tiefergelegene Rinne 24 abgeleitet werden. Die Flüssigkeit kann dort anschließend über eine der Pumpen 42 aufgesaugt werden und wahlweise im Modul 10 wiederverwendet oder aus dem Modul 10 abgeleitet werden.

Vorteile dieser Anordnungen sind: überschüssige Bewässerungsflüssigkeit wird abgeführt und kann wiederverwendet werden; die Ableitung erfolgt in Verbindung mit der ohnehin stattfindenden Bewegung des Gießwagen 14, dadurch minimierter Aufwand; die Wasserschiebeeinheit 84 reinigt gleichzeitig die Rinne 26, ohne dass manuelle Eingriffe erforderlich sind; Stauwasser und Schimmelbildung werden reduziert, was Wartung und Pflanzenwachstumsbedingungen (Hygiene) verbessert.

Nachfolgend wird die Aufzuchtplatte 18 unter Bezugnahme auf die Fig. 6A und 6B näher beschrieben. Fig. 6A zeigt die Aufzuchtplatte 18 in einer perspektivischen Ansicht, während Fig. 6B eine vergrößerte Schnittansicht darstellt.

Fig. 6A zeigt insbesondere eine Form und Größe der Aufzuchtplatte 18. Die Platte 18 umfasst eine Vielzahl von zellenartigen Fächern oder Kammern und ist so ausgeführt, dass sie als Träger für die systematische Kultivierung der Pflanzen und/oder Stecklinge 20 dient.

Die Platte 18 ist darauf ausgelegt, in den Regalen 16 platziert (manuell einheben) und bei Bedarf einfach entfernt (manuell ausheben) zu werden. Typischerweise werden die Fächer oder Kammern mit Erde, Substraten, Fasern oder anderen geeigneten Materialien befüllt. Jedes Fach/ jede Kammer kann eine einzelne Pflanze aufnehmen. Die Struktur der Aufzuchtplatte 18 ermöglicht eine gleichmäßige Anordnung der Pflanzen und optimiert die Nutzung der verfügbaren Fläche. Zudem unterstützt die stabile Struktur und leichte Handhabung der Platte 18 die Pflege und das Wachstum der Pflanzen während des gesamten Aufzuchtprozesses.

Fig. 6B zeigt in einer schematischen Schnittdarstellung eines der Fächer der Aufzuchtplatte 18 der Fig. 6A mit einem eingesetzten Steckling 20. Das Fach kann (im Schnitt) trapezförmig gestaltet sein, wobei eine kürzere Seite des Trapezes unten angeordnet ist. Sowohl das obere als auch das untere Ende des Fachs sind offen, so dass ein Setzling 20 von oben in eines der Fächer eingesetzt werden kann.

Ferner veranschaulicht Fig. 6B, dass, insbesondere am Ende eines Aufzuchtzyklus, die ausgebildeten Wurzeln eines Stecklings 20 aus der Unterseite der Aufzuchtplatte 18 herausragen können.

Besondere Vorteile dieser Anordnung sind: die trapezförmige Gestaltung und die offene Unterseite der Fächer ermöglichen das Herauswachsen der Wurzeln bei Platzmangel, insbesondere an einem Ende eines Aufzuchtzyklus; überschüssige Bewässerungsflüssigkeit kann aus der unteren Öffnung der Fächer abfließen, wodurch Stauwasser vermieden wird.

Ein Aufzuchtzyklus bei Stecklingen 20 beschreibt den Zeitraum, in dem die Pflanzen vom Zustand einer wurzellosen Pflanze bis zu einem Zustand mit ausgebildeten Wurzeln heranwachsen. Dieser Zeitraum beträgt bei Minze z.B. zwei Wochen, bei Rosmarin 7-8 Wochen und bei Lavendel 4-5 Wochen, während dessen das Modul 10 vorzugsweise sich selbst überlassen wird. Das Modul 10 kann während dieser Zeit autark arbeiten.

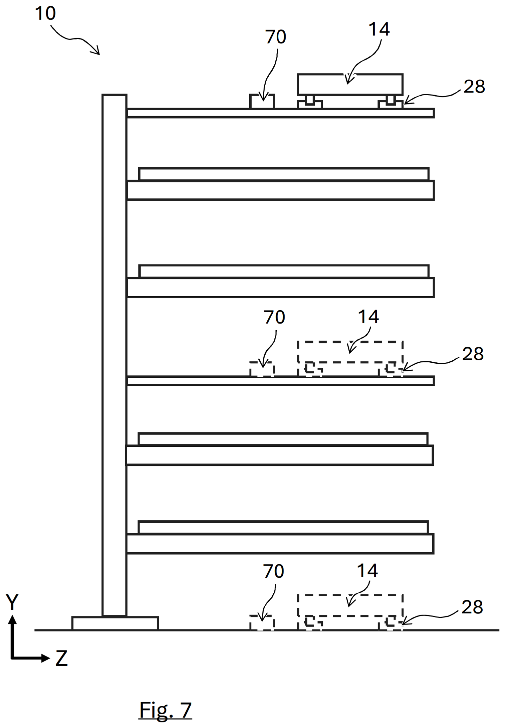

Fig. 7 zeigt, dass der Gießwagen 14 an verschiedenen Positionen innerhalb des Regals 16 angeordnet sein kann. Der Wagen 14 kann wahlweise auf dem Regal 16, innerhalb des Regals 16 oder unter dem Regal 16 positioniert sein. Die Führungsschienen 28 sowie die (optionale) Schleppkette 70 sind entsprechend den Positionen des Gießwagens 14 im Regal 16 angeordnet.

Es versteht sich, dass der Gießwagen 14 alternativ auch außerhalb des Regals 16 positioniert werden könnte, was in Fig. 7 nicht veranschaulicht ist. Die Positionierung des Gießwagens 14 innerhalb des Regals 16 bietet jedoch mehrere Vorteile: Bildung einer direkten Verbindung zwischen Wagen 14 und Regal 16, was eine verbesserte Führung des Wagens 14 ermöglicht; Bildung einer aufeinander abgestimmten Einheit aus Wagen 14 und Regal 16, dadurch Komptabilität gegeben; platzsparende Konstruktion ohne externe Führungsschienen; erhöhte Stabilität durch direkte Kopplung.

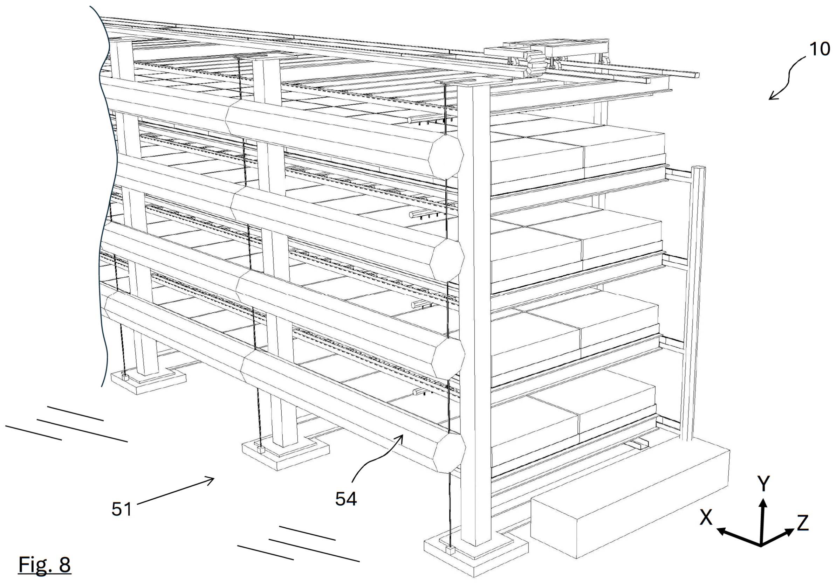

Fig. 8 zeigt die Rückseite des Regals 16 der Fig. 1, also insbesondere die unzugänglichen Längsseite 51. Zudem ist ersichtlich, dass für jede Ebene 19 des Regals 16 eine Belüftungseinheit 54 an der Regalanordnung 12 angebracht ist. Die Belüftungseinheit 54 kann mehrere Ebenen 19 des Regals 16 gleichzeitig versorgen. Ferner erstreckt sich die Belüftungseinheit 54 in X-Richtung und weist eine Vielzahl an (nicht gezeigten) Öffnungen auf, um alle Aufzuchtplatten 18 (von hinten) zu belüften.

Vorteilhaft wirkt sich die Belüftungseinheit 54 auf die Temperatur- und Luftfeuchtigkeitsbedingungen im Modul 10 aus, indem sie eine gleichmäßige Verteilung der Luftfeuchtigkeit und Temperatur gewährleistet. Dies verhindert Schimmelbildung und sorgt für optimale Wachstumsbedingungen der Pflanzen.

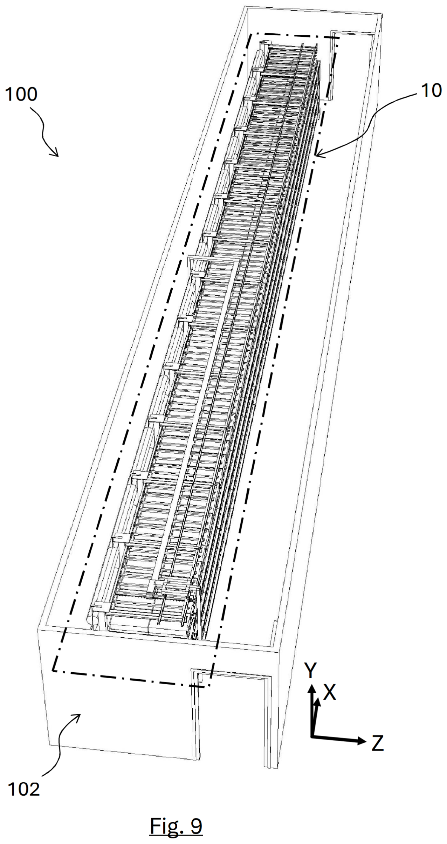

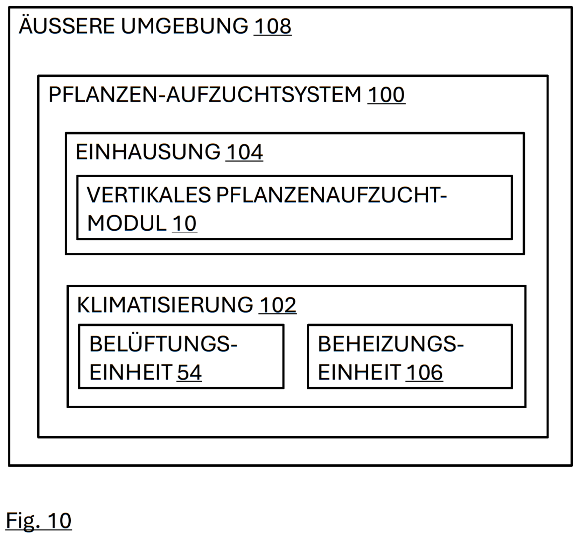

Fig. 9 und Fig. 10 zeigen eine Struktur eines Systems 100 gemäß der vorliegenden Erfindung.

Fig. 9 zeigt eine perspektivische Ansicht einer ersten Variante eines speziellen Pflanzenaufzucht-Systems 100, das allgemeiner in Form eines Blockdiagramms in Fig. 10 gezeigt ist. Die nachfolgende Beschreibung erfolgt unter gleichzeitiger Bezugnahme auf das spezielle System 100 der Fig. 9 und auf das allgemeinere System 100 der Fig. 10.

Beide Figuren zeigen das System 100, das ein Modul 10 gemäß der vorstehenden Beschreibung und eine (Bestands-)Klimatisierung 102 (vgl. Fig. 10) umfasst. Das Modul 10 kann von einer Einhausung 104 umschlossen sein. Die Klimatisierung 102 kann zumindest eine der (optionalen) Belüftungseinheiten 54 und/oder zumindest eine Beheizungseinheit 106 umfassen.

Die Einhausung 104 ist dazu ausgebildet, eine (feste) physische Trennung zwischen dem Modul 10 und einer äußeren Umgebung 108 (vgl. Fig. 10) zu realisieren, um einen (nahezu) geschlossenen Raum/Bereich für das System 100 zu bilden.

Die Einhausung 104 kann ortsfest (stationär, z.B. gemauert) oder ortsverstellbar (z.B. durch mobile Stellwände) ausgebildet sein.

Die äußere Umgebung 108 ist vorzugsweise ein Gewächshaus.

Die Klimatisierung 102 ist dazu ausgebildet, kontrollierte Temperatur- und Luftfeuchtigkeitsbedingungen im System 100 bereitzustellen.

Innerhalb des Systems 100 kann durch die Klimatisierung 102 vorzugsweise eine höhere Luftfeuchtigkeit und/oder Temperatur erzeugt werden als in der äußeren Umgebung 108. Die Einhausung 104 unterstützt die Aufrechterhaltung dieser Bedingungen.

Die relative Luftfeuchtigkeit kann bspw. auf Werte zwischen 70 und 80 % und die Temperatur bspw. auf Werte zwischen 14 und 28 °C geregelt werden, was für die Pflanzenaufzucht besonders vorteilhaft ist. Das Modul 10 benötigt in diesem Fall keine eigene Klimaanlage.

Die Einhausung 104 ist so gestaltet, dass sie das Modul 10 möglichst dicht und raumsparend umschließt. Diese Anordnung hat die Vorteile, dass es den Luftvolumenbedarf im System 100 und den Energieverbrauch reduziert, da weniger Luft beheizt und weniger Wasser für die Regulierung der Luftfeuchtigkeit benötigt wird. Auf diese Weise wird der Betrieb des Systems 100 kosteneffizienter gestaltet, während die spezifischen Bedürfnisse der Pflanzen weiterhin erfüllt werden.

Die Integration des Systems 100 in ein Gewächshaus ist besonders vorteilhaft. Das System 100 kann dabei die im Gewächshaus bereits vorgewärmte Luft und die vorherrschenden Luftfeuchtigkeitsbedingungen nutzen. Dadurch wird der Energieaufwand für den Betrieb des System 100 - und insbesondere für das Modul 10 - erheblich reduziert.

Vorzugsweise kann auf eine separate Klimatisierung 102 des Moduls 10 vollständig verzichtet werden, da das Modul 10 die bereits im Gewächshaus vorhandenen Luft- und Temperaturbedingungen nutzt, die durch eine im Gewächshaus integrierte Klimatisierung 102 eingestellt wird. Die Luftfeuchtigkeit im Modul 10 lässt sich durch Anpassung der Bewässerung regulieren, während die Temperatur durch das Gewächshaus vorgegeben ist. Insgesamt können dadurch sowohl Investitionsausgaben als auch Betriebskosten reduziert werden.

Zusätzlich ergeben sich in den kalten Monaten (bspw. Dezember bis Mai) Synergieeffekte, wenn das Modul 10 in ein Gewächshaus integriert wird, das beheizt wird. Die im Gewächshaus entstehende trockene Luft wird über die Belüftungseinheiten 54 mit der aus dem Modul 10 abgeführten feuchten Luft zirkuliert(vermischt), wodurch sich ein verbessertes Klima im gesamten Gewächshaus einstellt. Gleichzeitig profitiert das System 100 von der beheizten Luft des Gewächshauses, was den Heizbedarf innerhalb des Systems 100 weiter verringert.

Fig. 11 zeigt eine schematische Seitenansicht einer speziellen Ausführungsform des Pflanzenaufzucht-Moduls 10 mit einem doppelseitigen Kragarmregal.

Ein doppelseitiges Kragarmregal umfasst zwei (spiegelsymmetrisch angeordnete) Regale 16, die nebeneinander z.B. in der Z-Richtung positioniert sind. Für die Bewässerung kann ein (einziger) Wagen 14 vorgesehen sein, der sowohl für das rechte als auch das linke Regal 16 genutzt wird, indem er z.B. mittig zwischen und auf den Regalen 16 positioniert wird. Der Wagen 14 ist mit einer Bewässerungsvorrichtung 30 ausgestattet, die für jedes Regal 16 einen Mast 32 sowie entsprechende Arme 34 (und/oder Sprühdüsen 36) umfasst, die von der jeweils zugänglichen Längsseite 52 in das jeweilige Regal 16 hineinragen.

Der Vorteil dieser Ausführungsform liegt darin, dass nur ein einziger Wagen 14 für die Bewässerung beider Regale 16 erforderlich ist. Durch eine einzige Bewegung (Fahrt) des Wagens 14 wird eine gleichzeitige Bewässerung aller Regalebenen 19 beider Regale 16 ermöglicht. Dies reduziert den Zeitaufwand der Bewässerung und die Investitionsausgaben, da nur ein einziger Wagen 14 benötigt wird.

### Bezugszeichenliste

- 10: Pflanzen-Aufzuchtmodul
- 12: Regalanordnung
- 14: Gießwagen
- 16: Regal
- 18: Aufzuchtplatte
- 19: Regalebene
- 20: Steckling
- 22: Auffangwanne
- 24: Rinne
- 26: Beleuchtungsmittel
- 28: Führungsschiene
- 30: Bewässerungsvorrichtung
- 32: Bewässerungsmast
- 34: Bewässerungsarme
- 36: Bewässerungssprühdüse
- 38: Zuführleitung
- 40: Wassertank
- 42: Pumpe
- 44: Ventil
- 46: Regalsteher
- 48: Fußständer
- 50: Kragarm
- 51: unzugängliche Längsseite
- 52: zugängliche Längsseite
- 54: Belüftungseinheit
- 56: Fahrgestell
- 58: Laufräder
- 60: Führungsräder
- 62: Verbindungselement
- 64: Fahrantrieb
- 66: Steuerung
- 68: Sensor
- 70: Schleppkette
- 72: vertikale Höhe
- 74: Düse
- 76: Kamm
- 78: Lüfter
- 80: Eingriffselement
- 82: Sauger
- 84: Wasserschiebeeinheit
- 86: Abführleitung
- 100: Pflanzen-Aufzuchtsystem
- 102: Klimatisierung
- 104: Einhausung
- 106: Beheizungseinheit
- 108: äußere Umgebung
- α: Neigungswinkel

## Patentansprüche

1. Pflanzenaufzucht-Modul (10), das aufweist:
eine Regalanordnung (12), die aus zumindest einem, in einer Längsrichtung (X) angeordneten, Regal (16) gebildet wird, wobei jedes der Regale (16) mehrere in einer Höhenrichtung (Y) beabstandet angeordnete Regalebenen (19) aufweist, wobei austauschbare Aufzuchtplatten (18) manuell in den Regalebenen (19) platziert und aus den Regalebenen (19) entfernt werden, wobei jede der Regalebenen (19) dazu ausgebildet ist, zumindest eine der Aufzuchtplatten (18) in der Längsrichtung (X) und/oder in einer zur Längsrichtung senkrechten Tiefenrichtung (Z) aufzunehmen; und
einen längsbeweglichen Gießwagen (14) zum Bewässern der Aufzuchtplatten (18), wobei der Gießwagen (14) an das zumindest eine Regal (16) gekoppelt ist und eine daran befestigte Bewässerungsvorrichtung (30) umfasst, die ausgebildet ist, von einer zugänglichen Längsseite (52) des zumindest einen Regals (16) aus die Aufzuchtplatten (18) in jeder der Regalebenen (19) zu bewässern.

2. Pflanzenaufzucht-Modul (10) nach Anspruch 1, wobei die Bewässerungsvorrichtung (30) aufweist:
eine Vielzahl von Bewässerungsarmen (34), die in die Tiefenrichtung (Z) der jeweiligen Regalebene (19) hineinreichen und die dazu ausgebildet sind, die Aufzuchtplatten (18) vollflächig von oben zu beregnen; und/oder
eine Vielzahl von Bewässerungssprühdüsen (36), die vorzugsweise außerhalb des Regals (16) angeordnet sind, wobei die Bewässerungssprühdüsen (36) dazu ausgebildet sind, die Aufzuchtplatten (18) vollflächig entlang der Tiefenrichtung (Z) von der zugänglichen Längsseite (52) aus zu besprühen.

3. Pflanzenaufzucht-Modul (10) nach Anspruch 2, wobei die Vielzahl an Bewässerungsarmen (34) bzw. Bewässerungssprühdüsen (36) gleich einer Anzahl an Regalebenen (19) ist.

4. Pflanzenaufzucht-Modul (10) nach Anspruch 2 oder 3, wobei zumindest einige der Bewässerungsarme (34) oder der Bewässerungssprühdüsen (36) höhenverstellbar ausgebildet sind.

5. Pflanzenaufzucht-Modul (10) nach einem der vorstehenden Ansprüche, wobei an jedem der Bewässerungsarme (34) bzw. Bewässerungssprühdüsen (36) ferner zumindest eine mitfahrende Einheit angebracht ist, die ausgewählt ist aus:
einem Lüfter (78), um überschüssige Bewässerungsflüssigkeit von den Pflanzen zu blasen;
einem Kamm (76), um überschüssige Bewässerungsflüssigkeit von den Pflanzen abzustreifen; und/oder
einem Sauger (82), um überschüssige Bewässerungsflüssigkeit abzusaugen, die sich in einer Rinne (24) einer Auffangwanne (22) sammelt.

6. Pflanzenaufzucht-Modul (10) nach einem der vorstehenden Ansprüche, wobei die Bewässerungsvorrichtung (30) einen vertikal ausgerichteten Bewässerungsmast (32) umfasst, der an der zugänglichen Regalseite (52) angeordnet und dazu ausgebildet ist, die Bewässerungsarme (34) bzw. Bewässerungssprühdüsen (36) aufzunehmen.

7. Pflanzenaufzucht-Modul (10) nach einem der vorstehenden Ansprüche, wobei die Regalanordnung (12) eine vertikale Höhe (72) aufweist, so dass jede der Regalebenen (19) in einer für die manuelle Platzierung und Entfernung zugänglichen Reichweite angeordnet ist.

8. Pflanzenaufzucht-Modul (10) nach einem der vorstehenden Ansprüche, das ferner mindestens eine Auffangwanne (22), vorzugsweise für jede der Regalebenen (19) eine Auffangwanne (22), aufweist, die unterhalb der Aufzuchtplatten (18) anzuordnen ist, um überschüssige Bewässerungsflüssigkeit aufzunehmen, und insbesondere eine Rinne (24) aufweist, um die aufgenommene überschüssige Bewässerungsflüssigkeit abzuführen.

9. Pflanzenaufzucht-Modul (10) nach Anspruch 8, wobei jede der Auffangwannen (22) ein in Richtung der zugänglichen Längsseite (52) abfallendes Gefälle aufweist, wo insbesondere die Rinne (24) angeordnet ist.

10. Pflanzenaufzucht-Modul (10) nach einem der Ansprüche 8 oder 9, wobei am Gießwagen (14), und insbesondere am Bewässerungsmast (32), zumindest eine mitfahrende Wasserschiebeeinheit (84) angebracht ist, die dazu ausgebildet ist, die überschüssige Bewässerungsflüssigkeit in der Rinne (24) der Auffangwanne (22) entlang der Längsseite (52) zu befördern.

11. Pflanzenaufzucht-Modul (10) nach einem der vorstehenden Ansprüche, wobei der längsbewegliche Gießwagen (14):
- oben auf dem Regal (16) sitzt;
- unten in dem Regal (16) sitzt; oder
- mitten in dem Regal (16) sitzt.

12. Pflanzenaufzucht-Modul (10) nach einem der vorstehenden Ansprüche, wobei ferner Führungsschienen (28) vorgesehen sind, die dazu ausgebildet sind, eine Längsbewegung des Gießwagens (14) zu führen.

13. Pflanzenaufzucht-Modul (10) nach einem der vorstehenden Ansprüche, wobei der Gießwagen (14) ferner zumindest eine der nachfolgenden Komponenten umfasst:
- eine Zuführleitung (38) zu den Bewässerungsarmen (34)/Bewässerungssprühdüsen (36);
- einen Wassertank (40);
- ein Fahrgestell (56) mit daran angebrachten Laufrädern (58);
- einen Fahrantrieb (64);
- eine Steuerung (66), insbesondere mit einem an die Steuerung (66) koppelbaren Sensor (68); und/oder
- zumindest ein Führungsrad (60).

14. Pflanzenaufzucht-Modul (10) nach Anspruch 1, wobei die Regalanordnung (12) stationär angeordnet ist und jede der Regalebenen (19) ausgebildet ist, die Aufzuchtplatten (18) stationär aufzunehmen.

15. Pflanzenaufzucht-Modul (10) nach einem der vorstehenden Ansprüche, wobei das Modul zur Aufzucht von wurzellosen Stecklingen (20) ausgebildet ist, deren Wurzeln an einem Ende eines Aufzuchtzyklus aus einer Unterseite der Aufzuchtplatten (18) herausragen.

16. Pflanzenaufzucht-System (100), das insbesondere ein Gewächshaus umfasst, in welches:
ein eingehaustes Pflanzenaufzucht-Modul (10) nach einem der Ansprüche 1 bis 15 integriert ist; und
eine Klimatisierung (102) mit einer Belüftungseinheit (54) und/oder einer Beheizungseinheit (106).
